# EUROPEAN PATENT SPECIFICATION

(11) **EP 3 643 213 B1**
(45) Date of publication and mention of the grant of the patent: **06.04.2022**
(21) Application number: 18201821.8
(22) Date of filing: 22.10.2018
(51) Int. Cl.: A47J 31/44

(54) **AUTOMATIC COFFEE MACHINE**
KAFFEEAUTOMAT
MACHINE À CAFÉ AUTOMATIQUE

(43) Date of publication of application: 29.04.2020
(73) Proprietor: BSH Hausgeräte GmbH, 81739 München (DE)
(72) Inventor: Zibret, Igor, 3327 Smartno ob Paki (SI); Godec, Simon, 3000 Celje (SI); Krumpak, Matic, 3211 Skofja vas (SI)

(56) References cited:
- EP-A1- 2 407 068
- WO-A1-2011/064702
- WO-A1-2014/162262
- WO-A1-2015/197261
- WO-A1-2016/005304
- WO-A2-2011/015963
- CN-A- 106 859 354
- GB-A- 2 455 330

## Description

### Background of the invention

The present invention relates to an automatic coffee machine comprising: a milk container covered by a lid divided into a first portion and a second portion connected to each other by a hinge where the milk container has an adapter for fitting the milk container into the coffee machine housing, a milk frothing device with an automated self-cleaning mechanism.

### State of the art

Automatic coffee machines and milk containers are known e.g. from WO 2014/162262 A1, WO 2011/015963 A2, EP 2 407 068 A1, GB 2 455 330 A, WO 2015/197261 A1, WO 2011/064702 A1 and WO 2016/005304 A1.

The patent application US 6 158 328 A discloses an apparatus and methods for making drinks such as cappuccino, latte, espresso, coffee or filtered water which comprise a cold water filter system for purifying water for either direct consumption or use in extracting flavor-containing materials like coffee, a hot water filter assembly located on the brew head for removing impurities originated from both water itself and the parts of the apparatus in contact with water, and/or an automatic milk frothier for frothing the milk. The cold water filter system comprises a removable water container having at its bottom a water flow passageway, a filter cartridge removably mounted in the water flow passageway, a containing chamber for receiving filtered water, and a valve in the water flow passageway for automatically closing the passageway when the container is removed from and opening the passageway when placed onto the chamber. The hot water filter assembly comprises a filter cartridge having a hot water inlet and an outlet, a water distribution chamber formed between the brew head and cartridge inlet and encircled by an elastomer sealing ring, and a fixture for removably receiving the cartridge and retaining the cartridge in position to maintain the water distribution chamber intact during the operation of the apparatus. The milk frothier comprises a nozzle for transforming the steam into a steam jet, a chamber having an inlet port for receiving the steam jet, liquid passageway for drawing liquid into the chamber and an outlet port below the inlet port, liquid jet for transforming the liquid in the chamber into a liquid jet, an arrangement that allows the liquid jet to thrust into the liquid in a container and thereby producing fine air bubbles or foam in the liquid in the container, and foam level control for controlling the amount of foam to be produced.

The patent application US 5 473 972 A discloses a separate, removable milk container which can be attached to and detached from a cappuccino coffee maker. Alternatively, it can be attached to a modified espresso maker, converting it to making cappuccino. The container has make and break connections for a milk delivery tube, so that, when the unit is not in use, the milk container can be removed from the unit and stored in a refrigerator to prevent spoiling of the milk. The cappuccino maker includes a steam line to heat the coffee and milk. This line runs through a venturi, drawing milk into it, and then forces the steamed and frothed milk to a steamed milk outlet proximate to the coffee dispensing spout. The separate milk container includes means for attaching it to the unit and a milk tube which runs to the venturi. Thus, in use, the venturi draws milk from the container into the steam line and to the frothed milk outlet.

The Chinese patent application CN 1 06 859 354 A discloses a system and method for automatically cleaning a milk channel of a coffee machine, and belongs to the technical field of coffee machines. The problem that a milk channel of an existing coffee machine is inconvenient to clean is solved. The system comprises a water pump, a water tank, a water heater, an outputting device, a first branched circuit, a steam heater, a first branched circuit, a second branched circuit, a milk storage tank, a second branched circuit and a third branched circuit; the steam heater can be directly connected with the outputting device through the first branched circuit, then steam inside the steam heater cleans the first branched circuit and the outputting device, and the steam is discharged from a steam outlet; the steam inside the steam heater cleans the first branched circuit, and in this way, water resources can be fully utilized; no impurities exist in the steam inside the steam heater, and therefore the milk purity is ensured when people make milk foam or heat milk at next time.

### The aim of the invention

It is the object of the present invention to provide a further development with an advantage over the state of the art and provide simple and cheap solution protecting the consumer from getting hurt when the self-cleaning process of the coffee machine is performed and the milk container is detached from the coffee machine housing. The present invention provides coffee machine operation simple and intuitive.

### Summary of the invention

This object is solved by an automatic coffee machine whereby a coupling element of the adapter pushes a mechanical flap of the coffee machine into a position in which a milk or steam flow is provided.

An automatic coffee machine is a device designed for performing a brewing process and related processes in automatic way without user involvement. Processes which accompany the brewing process e.g. draining of the waste water or self-cleaning process are automatized to make the usage of the device easy and comfortable for the consumer. An automatic self-cleaning process is a process performed in order to clean components of the coffee machine milk system. Various bacteria, germs or fat may collect inside the milk system over time that's why the regular cleaning of the milk system is highly desired. The automatic cleaning process of the milk system activates after every drink, ensuring hygiene by preventing milk residue to develop. The milk system is automatically cleaned with a short jet of steam directly after preparing a milk drink.

The milk container is connected to the coffee machine by the adapter assembly. The adapter is designed in such a way to fit the milk container or a cardboard box in which the milk is originally packed. The positive effect of introducing the adapter assembly is that the consumer can choose between the cardboard box with milk and the milk container filled out by milk.

The mechanical flap is a simple element which shape is designed in such a way to close and open the corresponding steam outlet of the coffee machine.

The coupling element of the adapter pushes the mechanical flap and opens the steam outlet so the steam or milk flow is possible. The coupling element of the adapter is made out of silicone or other elastic material to provide a sealed connection with the coffee machine. A sealed connection means a connection in which the possibility of a leakage is greatly reduced.

### Preferred embodiment of the invention

In a preferred embodiment of the invention the mechanical flap is pivotally mounted inside the coffee machine in the vicinity of a steam outlet of the coffee machine. The coffee machine is equipped with a mechanical flap placed in the vicinity of the steam outlet of the coffee machine. The mechanical flap is a simple element which one end is connected to the coffee machine and the second end is free and can change its position in a vertical direction. The mechanical flap closes the steam outlet automatically by the force of gravity when the coupling element of the adapter with the milk container is not inserted into the coffee machine. The mechanical flap closes the steam outlet what means that the mechanical flap covers the steam outlet. The mechanical flap is designed as a simple element which one end is attached pivotally inside the coffee machine. The positive effect is that the mechanical flap can pivot in order to open or close the steam outlet depends on the presence of the milk container with the adapter.

According to the invention the mechanical flap automatically closes the steam outlet of the coffee machine when the milk container is detached from the coffee machine. One end of the mechanical flap is attached to the coffee machine body and the second end of the mechanical flap is able to move in vertical direction so the mechanical flap falls down automatically and closes the steam outlet by the force of gravity when the milk container is detached from the coffee machine body. When the milk container is attached to the coffee machine body the mechanical flap is pushed up in order to provide the steam or milk flow through the adapter assembly. The positive effect is that the risk of hurting the consumer by the outgoing steam is reduced and safety is ensured.

In a preferred embodiment of the invention a rotation point of the hinge lays out of the hinge geometry. The milk container is equipped with a lid which is divided in a first portion and a second portion connected with each other by a hinge. The second portion of the lid rotates around imaginary pivot placed on the inner side of the lid. The positive effect is that the second portion of the lid opens when the milk container is attached to the coffee machine and the milk container can be filled out with milk without interrupting the brewing process.

In another embodiment of the invention the hinge is arc shaped. The arc shape of the hinge provides easy manipulation of the lid by the user.

In another embodiment of the invention the hinge consist of a protrusion and rails with ribs placed at both ends of the rails. The protrusion is placed on the lid first portion and cooperates with rails which are placed on the lid second portion. Between rails at the both end of the rails the ribs are provided to block the lid second portion in its extreme positions what means in open and closed position. In order to change the position of the second portion of the lid the consumer needs to use some force. The protrusion slides against the rails and the movement is performed in smooth and comfortable way.

In a favorable embodiment of the invention the lid second portion opens to an angle of 90° what in practice means that the lid second portion can be opened to the substantially vertical position. The positive effect is that in such position the lid second portion is easily blocked by the ribs with less force. Another effect is that the pouring of the milk to the milk container can be performed in easy and comfortable way by the user.

In another embodiment of the invention the lid second portion is provided with a hook. The hook is placed on the lid second portion and engages the lid first portion when this two portions are substantially in the same plane. In practice the lid first portion and the lid second portion are in the same plane when the lid second portion closes the milk container. The hook is a simple and small element that prevents the unwanted lifting of the lid second portion.

In a favorable embodiment of the invention the adapter assembly consist of the coupling element, a connector and a flexible tube. The adapter assembly is detachably mounted onto the milk container.

The coupling element is a small part designed as a nozzle through which the milk is transported to the coffee machine in order to make foam.

The flexible tube is a part of the adapter which is placed inside the milk container or cardboard packaging in order to carry milk to the coffee machine through the connector and the coupling element.

The connector is a part which connects the coupling element and the flexible tube. In addition it fulfills an assembly function and is designed to be placed onto the milk container.

The adapter assembly is designed to fit not only the milk container but also the original milk package e.g. cardboard box. The adapter assembly is provided in order to give the customer the opportunity to select the "source" of the milk. The positive effect is that with the use of the original milk package the risk of fermentation of the milk leftovers in the milk container is eliminated. Another positive effect is that parts of the adapter can be detached and taken apart for cleaning.

In another embodiment of the invention the coffee machine is provided with a docking element for receiving the coupling element of the adapter. The docking elements is an element of the coffee machine body and is designed to receive the coupling element of the adapter so in consequence to provide the steam and milk flow. The positive effect is that the firmly assembly of the milk container and the coffee machine assembly is provided.

The present invention provides a simple and efficient solution which eliminates the risk of getting hurt of the customer during the self-cleaning process performed automatically by the coffee machine. When the milk container is detached out of the coffee machine body the customer is exposed for hot steam coming out the steam outlet. The present invention enables a coffee machine which use is safe and convenient for the user.

### Brief description of the figures

The construction of the invention, however, together with additional objects and corresponding advantages will be best understood from the following description of specific embodiments and in connection with the accompanying drawings.

Further benefits and advantages of the present invention will become apparent after a careful reading of the detailed description with appropriate reference to the accompanying drawings.

In the drawings:
- Fig. 1: shows a coffee machine in isometric view
- Fig. 2: shows an adapter assembly in isometric view,
- Fig. 3: shows a milk container with the adapter assembly cross section,
- Fig. 4: shows a cross section of the coffee machine and the milk container,
- Fig. 5: shows an enlarged portion of a cross section of the coffee machine with the milk container,
- Fig. 6: shows a cross section of the coffee machine without the milk container,
- Fig. 7: shows an enlarged portion of a cross section of the coffee machine without the milk container,
- Fig. 8: shows the milk container in isometric view,
- Fig. 9: shows a second portion of a lid in isometric view with enlarged hinge area,
- Fig. 10: shows a first portion of the lid in isometric view.

### Detail description of the invention

In cooperation with attached drawings, the technical contents and detailed description of the present invention are described thereinafter according to a preferable embodiment, being not used to limit its executing scope. Any equivalent variation and modification made according to appended claims is all covered by the claims claimed by the present invention.

In the following description of the preferred embodiments of the present invention, similar identical reference numbers designate identical of comparable components.

The automatic coffee machine is a device for preparing different kind of hot beverages like espresso or cappuccino. For the consumer satisfaction a full automatic coffee machines are present on the market in which most of the processes are performed in automatic way without user involvement e.g. cleaning of the coffee machine milk system.

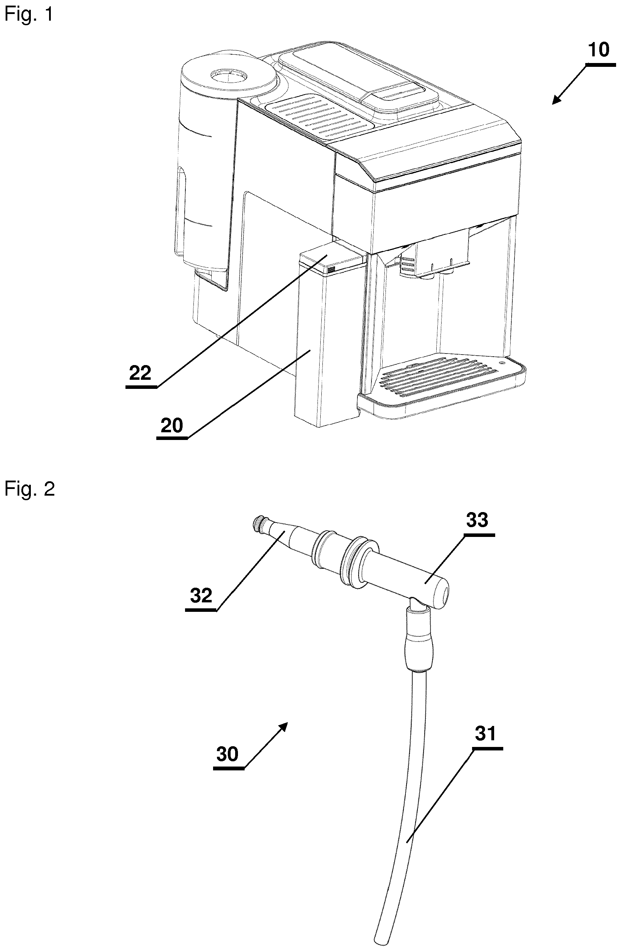

Fig. 1 shows a coffee machine 10 in isometric view. The coffee machine 10 is provided with a milk container 20 which is equipped with a lid.
Fig. 2 shows an adapter 30 assembly in isometric view. The adapter 30 assembly consist of a coupling element 32, a connector 33 and a flexible tube 31. The connector 33 is a part which connects the coupling element 32 and the flexible tube 31 and the shape of the connector 33 allows the adapter 30 assembly to be mounted on the milk container 20. The flexible tube 31 is attached to the connector 33 and its function is to suck up the milk in order to make a milk foam. All parts of the adapter 30 assembly are assembled together and also can be disassembled for the cleaning purpose. The coupling element 32, the connector 33 and the flexible tube 31 are made out of elastic material.

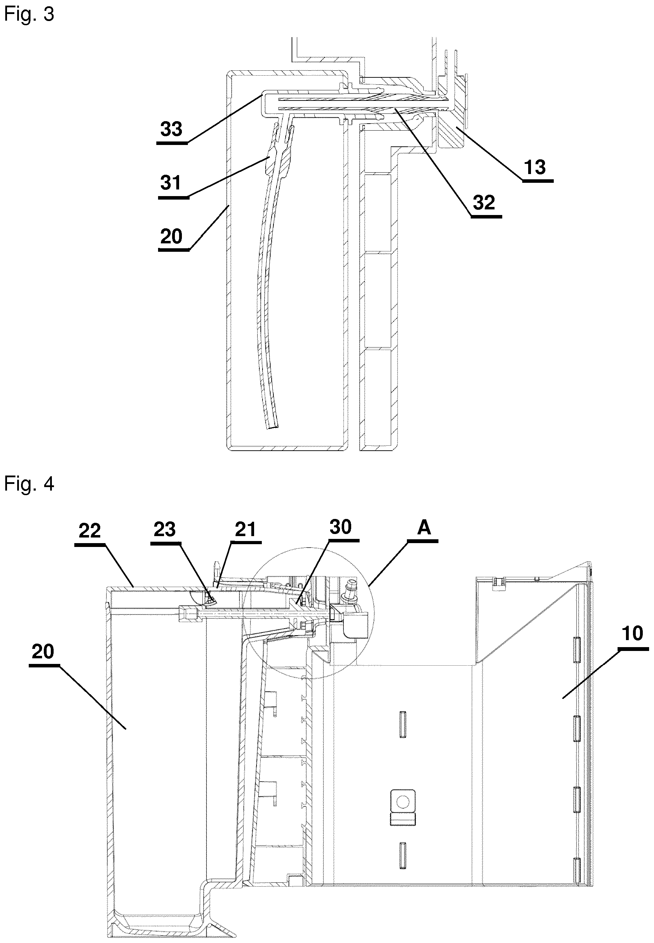

Fig 3 shows the milk container 20 with the adapter 30 assembly cross section. The coupling element 32 of the adapter 30 assembly is fitted into the docking element 13 of the coffee machine 10 (shown partially on the figure). The coupling element 32 is a nozzle shaped element. The coupling element 32 has an inner channel for milk or steam flow. The connector 33 and the flexible tube 31 also are designed in such a way to allow the milk or steam flow through said elements.
Fig. 4 shows a cross section of the coffee machine 10 and the milk container 20. The milk container 20 is attached to the coffee machine 10 by the adapter 30 assembly through which a milk and steam flow is possible.

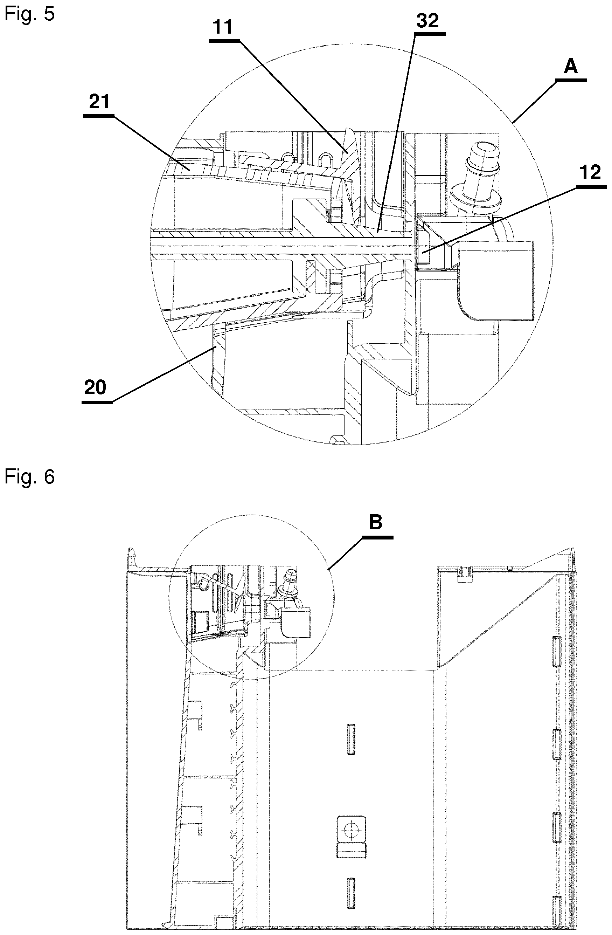

Fig. 5 shows an enlarged portion of a cross section of the coffee machine 10 with the milk container 20. The coupling element 32 is placed into the docking element 13 of the coffee machine 10. When the milk container 20 is attached to the coffee machine 10 the mechanical flap 11 is pushed up by the coupling element 32 and causes that the steam outlet 12 opens and in effect the flow path for the steam or milk is established.
Fig. 6 shows a cross section of the coffee machine 10 without the milk container 20. The milk container 20 is detached from the coffee machine 10 housing. The steam outlet 12 is covered by the mechanical flap 11.

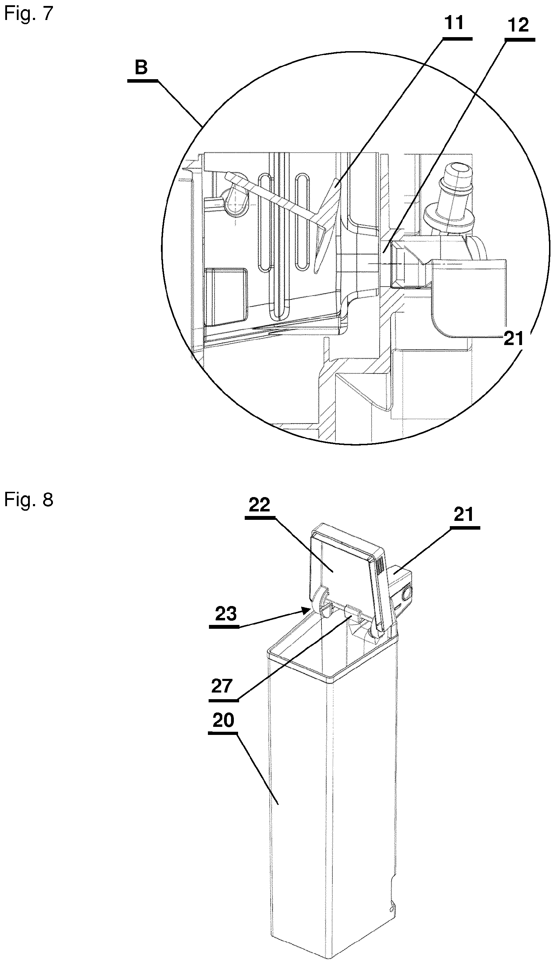

Fig. 7 shows an enlarged portion of a cross section of the coffee machine 10 without the milk container 20. When the milk container 20 is detached from the coffee machine 10 the mechanical flap 11 automatically closes the steam outlet 12 and prevents the steam to get outside the coffee machine 10.
Fig. 8 shows the milk container 20 in isometric view. The milk container 20 is covered by a lid. The lid is divided into a first portion 21 and a second portion 22 connected to each other by a hinge 23. The lid is detachably mounted onto the milk container 20. During normal use the lid is in substantially horizontal position and closes the milk container 20. The lid first portion 21 stays in such position when it is attached to the coffee machine 10 (not shown on the figure). The lid second portion 22 is pivotally connected to the first portion 21 by a hinge 23. Thanks to the hinge 23 the position of the second portion 22 can be changed by 90°. It means that the second portion 22 can be set out in substantially vertical position. When the second portion 22 is in such position the milk can be poured into the milk container 20 without interrupting the brewing process. The second portion 22 is equipped with a hook 27. The hook 27 is placed on the edge of the second portion 22 in the vicinity of the first portion 21 and after closing the second portion 22 the hook 27 engages the first portion 21 to establish firmly closing of the milk container 20. The hook 27 prevents the second portion 22 from accidental opening.

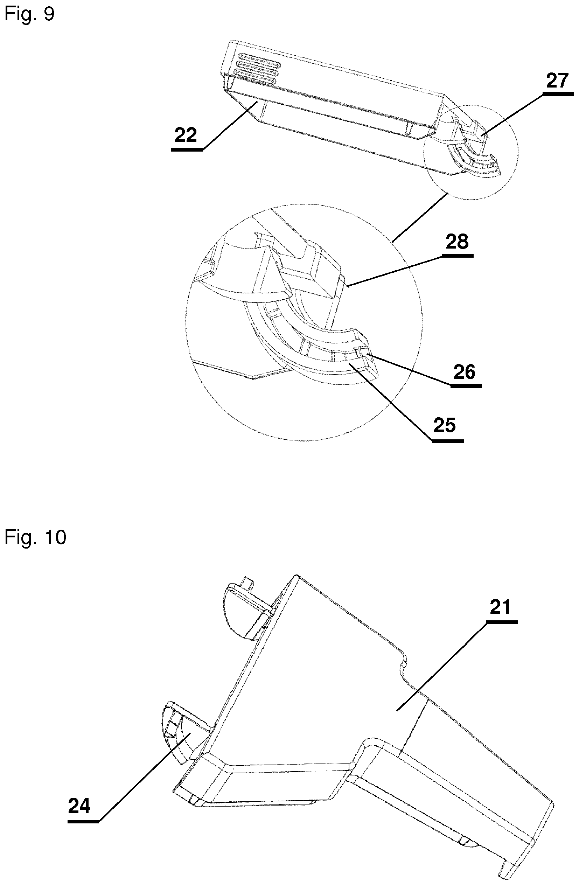

Fig. 9 shows a second portion 22 of a lid in isometric view with enlarged hinge 23 area. The rotation point 28 of the second portion 22 lays out of the hinge 23 geometry. The hinge 23 consist of elements placed on the first portion 21 of the lid and on the second portion 22 of the lid. The elements of the second portion 22 of the lid are two rails 25 and ribs 26. Rails 25 are arc shaped. Ribs 26 are small elements which are placed between rails 25 at both ends of the rails 25 and blocks the second portion 22 of the lid in its extreme positions which means horizontal and vertical position or in other words the opened and closed position.
Fig. 10 shows the first portion 21 of the lid in isometric view. The first portion 21 is equipped with protrusions 24 which are parts of the hinge 23. Protrusions 24 cooperates with rails 25 placed on the first portion 21 of the lid. The position of the lid first portion 21 is substantially horizontal.

The present invention provides a simple and efficient solution which eliminates the risk of getting hurt of the customer during the self-cleaning process performed automatically by the coffee machine. When the milk container is detached out of the coffee machine body the customer is exposed for hot steam coming out the steam outlet. The present invention enables a coffee machine which use is safe and convenient for the user.

### List of reference signs

The figures have been each numbered corresponding the following:
- 10: coffee machine
- 11: mechanical flap
- 12: steam outlet
- 13: docking element

- 20: milk container
- 21: first portion
- 22: second portion
- 23: hinge
- 24: protrusion
- 25: rails
- 26: ribs
- 27: hook
- 28: rotation point

- 30: adapter
- 31: tube
- 32: coupling element
- 33: connector

## Claims

1. An automatic coffee machine (10) comprising:
a milk container (20) covered by a lid, where the lid is preferably divided into a first portion (21) and a second portion (22) connected to each other by a hinge (23), and where the milk container (20) has an adapter (30) for fitting the milk container (20) into the coffee machine (10) housing,
and a milk frothing device with an automated self-cleaning mechanism **characterized in that** a coupling element (32) of the adapter (30) pushes a mechanical flap (11) of the coffee machine (10) into a position in which a milk or steam flow is provided, and **in that** the mechanical flap (11) automatically closes the steam outlet (12) of the coffee machine (10) and prevents the steam to get outside the coffee machine (10) when the milk container (20) is detached from the coffee machine (10).

2. The automatic coffee machine (10) according to claim 1, **characterized in that** the mechanical flap (11) is pivotally mounted inside the coffee machine (10) in the vicinity of a steam outlet (12) of the coffee machine (10).

3. The automatic coffee machine (10) according to claim 1, **characterized in that** a rotation point (28) of the hinge (23) lays out of the hinge (23) geometry.

4. The automatic coffee machine (10) according to claim 1, **characterized in that** the hinge (23) is arc shaped.

5. The automatic coffee machine (10) according to claim 1, **characterized in that** the hinge (23) consist of a protrusion (24) and rails (25) with ribs (26) placed at both ends of the rails (25).

6. The automatic coffee machine (10) according to claim 1, **characterized in that** the lid second portion (22) opens to an angle of 90°.

7. The automatic coffee machine (10) according to claim 1, **characterized in that** the lid second portion (22) is provided with a hook (27).

8. The automatic coffee machine (10) according to claim 1, **characterized in that** the adapter (30) assembly consist of the coupling element (32), a connector (33) and a flexible tube (31).

9. The automatic coffee machine (10) according to claim 1, **characterized in that** the adapter (30) is detachably mounted onto the milk container (20).

10. The automatic coffee machine (10) according to claim 1, **characterized in that** the coffee machine (10) is provided with a docking element (13) for receiving the coupling element (32) of the adapter (30).

## Patentansprüche

1. Kaffeeautomat (10), der Folgendes umfasst:
einen Milchbehälter (20), der mit einem Deckel abgedeckt ist, wobei der Deckel vorzugsweise in einen ersten Abschnitt (21) und einen zweiten Abschnitt (22) unterteilt ist, die über ein Scharnier (23) miteinander verbunden sind, und der Milchbehälter (20) einen Adapter (30) zum Einpassen des Milchbehälters (20) in das Gehäuse der Kaffeemaschine (10) aufweist,
und eine Milchaufschäumvorrichtung mit einem automatischen Selbstreinigungsmechanismus,
**dadurch gekennzeichnet, dass** ein Koppelelement (32) des Adapters (30) eine mechanische Klappe (11) der Kaffeemaschine (10) in eine Position drückt, in der ein Milch- oder Dampfstrom bereitgestellt wird, und die mechanische Klappe (11) den Dampfauslass (12) der Kaffeemaschine (10) automatisch schließt und verhindert, dass der Dampf aus der Kaffeemaschine (10) austritt, wenn der Milchbehälter (20) davon abgenommen ist.

2. Kaffeeautomat (10) nach Anspruch 1, **dadurch gekennzeichnet, dass** die mechanische Klappe (11) in der Nähe eines Dampfauslasses (12) der Kaffeemaschine (10) schwenkbar in der Kaffeemaschine (10) angebracht ist.

3. Kaffeeautomat (10) nach Anspruch 1, **dadurch gekennzeichnet, dass** ein Drehpunkt (28) des Scharniers (23) außerhalb der Geometrie des Scharniers (23) liegt.

4. Kaffeeautomat (10) nach Anspruch 1, **dadurch gekennzeichnet, dass** das Scharnier (23) bogenförmig ist.

5. Kaffeeautomat (10) nach Anspruch 1, **dadurch gekennzeichnet, dass** das Scharnier (23) aus einem Vorsprung (24) und Schienen (25) besteht, wobei an beiden Enden der Schienen (25) Rippen (26) angeordnet sind.

6. Kaffeeautomat (10) nach Anspruch 1, **dadurch gekennzeichnet, dass** sich der zweite Abschnitt (22) des Deckels bis zu einem Winkel von 90° öffnen lässt.

7. Kaffeeautomat (10) nach Anspruch 1, **dadurch gekennzeichnet, dass** der zweite Abschnitt (22) des Deckels mit einem Haken (27) versehen ist.

8. Kaffeeautomat (10) nach Anspruch 1, **dadurch gekennzeichnet, dass** die Baugruppe des Adapters (30) aus dem Koppelelement (32), einem Verbinder (33) und einem Schlauch (31) besteht.

9. Kaffeeautomat (10) nach Anspruch 1, **dadurch gekennzeichnet, dass** der Adapter (30) lösbar an dem Milchbehälter (20) angebracht ist.

10. Kaffeeautomat (10) nach Anspruch 1, **dadurch gekennzeichnet, dass** die Kaffeemaschine (10) mit einem Anschlusselement (13) zum Aufnehmen des Koppelelements (32) des Adapters (30) versehen ist.

## Revendications

1. Machine à café automatique (10) comprenant :
un contenant à lait (20) couvert par un couvercle, dans lequel le couvercle est de préférence divisé en une première partie (21) et une deuxième partie (22) reliées l'une à l'autre par une charnière (23), et dans lequel le contenant à lait (20) possède un adaptateur (30) pour adapter le contenant à lait (20) dans le logement de machine à café (10), et un dispositif de moussage de lait avec un mécanisme auto-nettoyant automatique **caractérisée en ce qu'**un élément de couplage (32) de l'adaptateur (30) pousse un clapet mécanique (11) de la machine à café (10) dans une position dans laquelle un flux de lait ou de vapeur est fourni, et **en ce que** le clapet mécanique (11) ferme automatiquement la sortie de vapeur (12) de la machine à café (10) et empêche la vapeur de sortir de la machine à café (10) lorsque le contenant à lait (20) est séparé de la machine à café (10).

2. Machine à café automatique (10) selon la revendication 1, **caractérisée en ce que** le clapet mécanique (11) est monté de façon pivotante à l'intérieur de la machine à café (10), à proximité d'une sortie de vapeur (12) de la machine à café (10).

3. Machine à café automatique (10) selon la revendication 1, **caractérisée en ce qu'**un point de rotation (28) de la charnière (23) se trouve en dehors de la géométrie de la charnière (23).

4. Machine à café automatique (10) selon la revendication 1, **caractérisée en ce que** la charnière (23) est de forme arquée.

5. Machine à café automatique (10) selon la revendication 1, **caractérisée en ce que** la charnière (23) consiste en une protrusion (24) et des rails (25) avec nervures (26) placés aux deux extrémités des rails (25).

6. Machine à café automatique (10) selon la revendication 1, **caractérisée en ce que** la deuxième partie du couvercle (22) s'ouvre selon un angle de 90°.

7. Machine à café automatique (10) selon la revendication 1, **caractérisée en ce que** la deuxième partie du couvercle (22) est pourvue d'un crochet.

8. Machine à café automatique (10) selon la revendication 1, **caractérisée en ce que** l'assemblage de l'adaptateur (30) consiste en l'élément de couplage (32), un connecteur (33) et un tuyau flexible (31).

9. Machine à café automatique (10) selon la revendication 1, **caractérisée en ce que** l'adaptateur (30) est monté de façon amovible sur le contenant à lait (20).

10. Machine à café automatique (10) selon la revendication 1, **caractérisée en ce que** la machine à café (10) est pourvue d'un élément d'amarrage (13) pour recevoir l'élément de couplage (32) de l'adaptateur (30).
